(19) Europäisches Patentamt
European Patent Office
Office européen des brevets

(11) Publication number: 0 267 335 B1

(12) EUROPEAN PATENT SPECIFICATION

(45) Date of publication of patent specification: 25.03.92

(51) Int. Cl.5: C08B 37/00, A61K 31/715

(21) Application number: 86308875.3

(22) Date of filing: 13.11.86

The file contains technical information submitted after the application was filed and not included in this specification

# (54) Glucan derivatives.

(43) Date of publication of application:
18.05.88 Bulletin 88/20

(45) Publication of the grant of the patent:
25.03.92 Bulletin 92/13

(84) Designated Contracting States:
BE CH DE FR GB IT LI NL SE

(56) References cited:

MAKROMOLEKULARE CHEMIE - MACROMOLECULAR CHEMISTRY AND PHYSICS, vol. 187, no. 2, February 1986, pages 317-324, Heidelberg, DE; KEI MATSUZAKI et al.: "Synthesis of water-soluble polysaccharides and their antitumor activity, 2a)"

(73) Proprietor: AJINOMOTO CO., INC.
5-8, Kyobashi 1-chome, Chuo-ku
Tokyo 104(JP)

(72) Inventor: Matsuzaki, Hajime
No. 4-10-10, Naritahigashi Suginami-ku
Tokyo(JP)
Inventor: Yamamoto, Isao
No. 2-16-25, Fumiiri
Ueda-shi Nagano-shi(JP)

(74) Representative: Bond, Bentley George et al
HASELTINE LAKE & CO. Hazlitt House 28
Southampton Buildings Chancery Lane
London, WC2A 1AT(GB)

EP 0 267 335 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to new glucan derivatives having antitumour activity, which are of potential use as antitumour agents and as other medicines.

It is known that many natural polysaccharides and natural products composed mainly of polysaccharides have antitumour activity. Of special note are β-1,3-glucan carrying branched chains such as lentinan, BCG, and components of the cells of tubercule bacillus (G. Chihara, "Cancer and Immunological Enhancement", Kodansha Scientific, 7-111 (1980)). Of these, BCG consists of living attenuated bacterial cells (bovine tubercule bacillus) and cannot be regarded as completely nontoxic; hence, research has been concentrated upon various extracts from the cell wall of tubercule bacillus.

The polysaccharide portion of the cell wall of tubercule bacillus may be roughly classified into two groups (A. Misaka and I. Azuma, Bulletin of Osaka City University, Life Science Department, 29, 33, 1981), namely (1) an α-(1→6)-mannan main chain carrying, as a side chain, D-mannose, D-mannobiose or oligoarabinan (oligo-α-(1→5)-D-arabinofuranan); and (2) a β-(1→4)-galactan main chain carrying an oligoarabinan side chain. It is known that the latter exhibits higher antitumour activity.

In Makromol. Chem., 187, 317-324 (1986), there is disclosed the synthesis of polysaccharides having β-glycosidically linked D-glucose branches, by the condensation of 3,4,6-tri-O-acetyl-(1,2-O-ethylorthoacetyl)-α-D-glucopyranose with activated curdlan (β-(1→3)-glucan). Some of the polysaccharides have a high antitumour activity.

There is a demand for substances which have high antitumour activity with less toxicity and which can be produced easily at low costs.

We have succeeded in synthesizing for the first time β-(1→3)-glucan derivatives carrying, as one or more side chains, galactopyranose or an oligomer thereof, and have found that these new polysaccharides have high antitumour activity and have potential use as anticancer drugs. This invention was accomplished based on these findings.

Thus, according to the present invention, there is provided a β-(1→3)-glucan containing at least one of galactopyranose and oligomers thereof as one or more side chains.

As the starting material for the synthesis of the glucan derivatives of this invention, there is preferably used any natural β-(1→3)-glucan having a molecular weight of 10,000 or higher, such as curdlan, pachyman, β-(1→3)-glucan, contained in cell wall.

To this glucan main chain, there is introduced a galactopyranose or an oligomer thereof (such as a dimer or trimer) as branched chain to give a glucan derivative of this invention. The branching degree (the number of branches introduced onto 100 glucose units) is preferably in the range of from 5 to 60, and the branched chains should preferably be bonded to the 6-position of the glucose unit to ensure sufficient solubility in water.

The introduction of D-galactopyranose is preferably effected by condensation of its ortho ester (formula I below) with the hydroxyl groups of glucan in the presence of, for example, 2,6-dimethylpyridinium perchlorate as catalyst, followed by solvolysis with a methanolic solution of sodium methoxide:

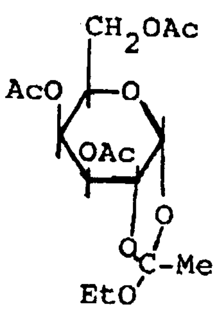

Formula I

This reaction may be effected more efficiently if the hydroxyl groups of the main glucan chain are previously protected with acyl radicals (e.g. acetyl radicals). The degree of acyl substitution is preferably in the range of from 1 to 2.5, more preferably about 2.0.

The chemical structure of the glucan derivatives thus obtained can be determined by gas chromatography of corresponding alditol acetates derived by hydrolysis, reduction and acetylation.

A branching degree of 30%, for example, can be achieved by repeating the above condensation reaction two or three times.

Herein, Ac and Et mean acyl and ethyl groups, respectively.

The following Examples illustrate the invention.

EXAMPLE 1

Curdlan ( β-(1→3)-glucan; Wako Junyaku) was acetylated by heating it with acetic anhydride in pyridine at 75 °C for five minutes. The acetyl derivative thus obtained (degree of substitutio n, DS: 1.92) was activated by immersion in ethanol/water (1:1) for 24 hours, in ethanol/water (3:1) for 24 hours and in ethanol for four hours in that order, followed by washing with diethyl ether and drying in vacuum.

The activated curdlan thus prepared (0.69g) was swollen in 30ml of chlorobenzene by heating the mixture at 70 °C for 60 minutes, a solution of 5.5 g of 3,4,6-tri-O-acetyl(1,2,-O-ethylorthoacetyl)-α-D-galactopyranose (formula I) in 18 ml chlorobenzene was added, and the resulting mixture was heated. When 5 ml of the chlorobenzene had distilled off, 20 ml of 2,6-dimethylpyridinium perchlorate was added as catalyst, and the mixture was heated under reflux for 120 minutes. The reaction mixture was poured into methanol, and the precipitate which separated out was collected, washed with methanol and diethyl ether in that order, and dried in vacuum (yield: 0.66 g). Swelling under heating and reaction with 3,4,6-tri-O-acetyl-(1,2-O-ethylorthoacetyl)-α-D-galactopyranose were further repeated two more times (yield: 0.69 g). A mixture of the product thus obtained (0.3 g) and 0.5N-NaOH (15 ml) was allowed to stand at room temperature for two days, the mixture was neutralized with 0.1N-HCl, and the resulting solution was subjected to dialysis over a period of three to four days. After removing insoluble matter, the solution was concentrated and freeze dried (yield: 92% of the theoretical yield).

The probable structure of the glucan derivative obtained above is as follows:

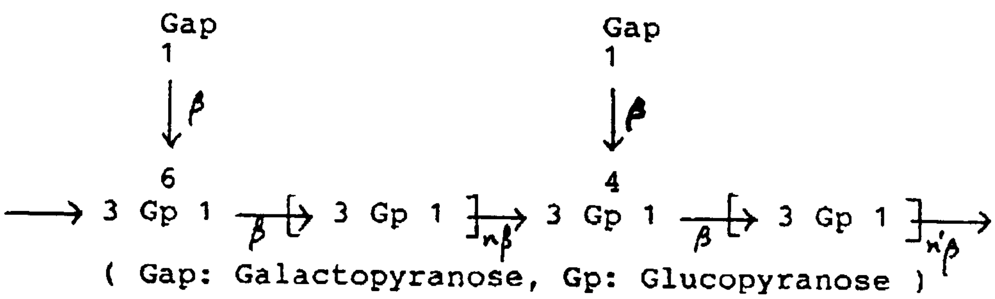

( Gap: Galactopyranose, Gp: Glucopyranose )

The composition (galactose/glucose ratio) and molecular weight of the polysaccharide obtained was determined as described below.

A polysaccharide sample was hydrolyzed with formic acid, followed by reduction with sodium borohydride and acetylation with acetic anhydride in the presence of pyridine. Gas chromatographic analysis of the alditol acetate thus obtained gave a galactose/glucose ratio of 14.9%. The molecular weight of the glucan was found to be 226,000 (in the acetylated form) when measured by gel permeation chromatography using monodisperse polystyrene as standard substance.

EXAMPLE 2 (ANTITUMOUR ACTIVITY TEST)

An antitumour activity test was conducted in the following manner. Cells of sarcoma 180 ($1 \times 10^6$) were subcutaneously implanted at the axilla of ICR-JCL mice. Twenty-four hours after implantation, a solution of polysaccharides in physiological saline was intravenously and abdominally injected at a daily dose of 10 mg/kg(body weight), and the same solution was orally administered at daily doses of 10, 50 and 100 mg/kg. Five weeks after implantation, the tumours formed were excised and their total weight was measured (B grams). The total weight of tumours of the control group (with no polysaccharide used, was measured in the same manner (A grams). The tumor inhibition rate was calculated according to the following formula:

Tumour Inhibition Rate (%) = (A-B)/A x 100

The test results for the glucan derivative obtained by Example 1 are summarized in the Table below.

As is apparent, the new glucan derivatives of this invention have potential use as anticancer drugs. Hence, the derivatives are of great value in the pharmaceutical industry.

Table

| Sample | Dose | Administration | Tumor Inhibition Rate | Perfect Cure Rate |
|---|---|---|---|---|
| Ex. 1 | 10mg/Kg | Intravenous | 100% | 7/7 |
| " | " | Abdominal | 100 | 7/7 |
| " | " | Oral | 52 | 0/7 |
| " | 50mg/Kg | " | 59 | 0/7 |
| " | 100mg/Kg | " | 79 | 3/7 |
| Curdlan (control) | 5mg/Kg | Intravenous | -5 | 0/7 |
| " | " | Abdominal | 10.2 | 0/7 |
| " | 50mg/Kg | Oral | -17 | 0/7 |

## Claims

1. A $\beta$-(1→3)-glucan containing at least one of galactopyranose and oligomers thereof as one or more side chains.

2. A $\beta$-(1→3)-glucan as claimed in claim 1 or 2, wherein said side chain(s) are bonded in the 6-position of the glucose constituting the $\beta$-(1→3)- glucan

3. A $\beta$-(1→3)-glucan as claimed in any of claims 1 to 3, wherein said side chain(s) are bonded to the $\beta$-(1→3)-glucan in the ratio of 5 to 60 side chains per 100 glucose units constituting the $\beta$-(1→3)-glucan.

4. A $\beta$-(1→3)-glucan as claimed in any of claims 1 to 4, the $\beta$-(1→3)-glucan being soluble in water.

5. For use as an oral antitumour agent, a $\beta$-(1→3)-glucan as claimed in any of claims 1 to 5.

## Revendications

1. Un $\beta$-(1→3)-glucane contenant au moins une ou plusieurs chaînes latérales de galactopyrannose et d'oligomères de celui-ci.

2. Un $\beta$-(1→3)-glucane selon la revendication 1, selon lequel la ou lesdite chaînes latérales sont liées dans la position 6 du glucose constituant le $\beta$-(1→3)-glucane.

3. Un $\beta$-(1→3)-glucane selon l'une des revendications précédentes 1 et 2, selon lequel la ou lesdites chaînes latérales sont liées au $\beta$-(1→3)-glucane dans un rapport de 5 à 60 chaînes latérales pour 100 unités de glucose constituant le $\beta$-(1→3)-glucane.

4. Un $\beta$-(1→3)-glucane selon l'une des revendications précédentes 1 à 3, le $\beta$-(1→3)-glucane étant soluble dans l'eau.

5. A utiliser comme un agent antitumoral oral, un $\beta$-(1→3)glucane selon l'une quelconque des revendications précédentes 1 à 4.

## Patentansprüche

1. $\beta$-(1→3)-Glucan, das mindestens eine der Verbindungen Galactopyranose und deren Oligomere als eine oder mehrere Seitenketten enthält.

2. $\beta$-(1→3)-Glucan nach Anspruch 1, wobei die Seitenkette(n) in 6-Stellung der das $\beta$-(1→3)-Glucan aufbauenden Glucose gebunden ist bzw. sind.

3. $\beta$-(1→3)-Glucan nach Anspruch 1 oder 2, worin die Seitenkette(n) in einem Verhältnis von 5 bis 60 Seitenketten auf 100 das $\beta$-(1→3)-Glucan aufbauenden Glucoseeinheiten gebunden ist bzw. sind.

**4.** $\beta$-(1→3)-Glucan nach einem der Ansprüche 1 bis 3, welches in Wasser löslich ist.

**5.** $\beta$-(1→3)-Glucan nach einem der Ansprüche 1 bis 4 zur Verwendung als orales Antitumormittel.